# FASCICULE DE BREVET EUROPEEN

(11) **EP 3 269 595 B1**
(45) Date de publication et mention de la délivrance du brevet: **13.02.2019**
(21) Numéro de dépôt: 17178917.5
(22) Date de dépôt: 30.06.2017
(51) Int. Cl.: B60Q 1/04

(54) **DISPOSITIF DE RÉPARATION À PAROI DE MASQUAGE, POUR UN BLOC OPTIQUE USAGÉ DE VÉHICULE**
REPARATURVORRICHTUNG MIT SICHTSCHUTZWAND FÜR EINE GESCHÄDIGTE LEUCHTEINRICHTUNG EINES FAHRZEUGS
REPAIR DEVICE WITH MASKING WALL, FOR A DAMAGED LIGHTING DEVICE OF A VEHICLE

(30) Priorité: 13.07.2016 FR 1656783
(43) Date de publication de la demande: 17.01.2018
(73) Titulaire: PSA Automobiles SA, 78300 Poissy (FR)
(72) Inventeur: JEANNEAU, Clément, 92100 Boulogne Billancourt (FR); JAUBERTHIE, Eric, 78390 Bois d'Arcy (FR); MOLTO, Valerie, 78000 Versailles (FR)

(56) Documents cités:
- JP-A- 2006 103 454
- US-A1- 2002 145 881
- US-B1- 6 257 749

## Description

L'invention concerne les blocs optiques de véhicule qui comprennent un boîtier muni d'au moins une patte de fixation.

Certains blocs optiques de véhicule, généralement de type automobile, comprennent un boîtier comportant au moins une patte de fixation munie d'une première partie (solidarisée fixement au boîtier), d'une seconde partie propre à être solidarisée à leur véhicule, et d'une zone d'affaiblissement intercalée entre les première et seconde parties et propre à se casser lorsqu'ils subissent un choc.

Grâce à cette zone d'affaiblissement qui se casse en cas de choc, il peut arriver que le reste du bloc optique soit intact. Dans ce cas, le bloc optique peut être réutilisé moyennant le couplage d'un dispositif de réparation à la première partie de la patte de fixation de son boîtier qui comprend à cet effet au moins un trou muni d'un filetage interne.

Les dispositifs de réparation connus comprennent une pièce comprenant une partie principale propre à être solidarisée au véhicule et prolongée sur un côté par une paroi destinée à être placée en regard de la face avant de la première partie de la patte de fixation. Cette paroi comprend au voisinage de la partie principale une zone d'affaiblissement propre à se casser en cas de choc subi par le bloc optique, et au moins un trou propre à être placé devant un trou associé de la première partie de la patte de fixation. Une vis est introduite dans chaque trou de la paroi, puis vissée dans chaque trou fileté associé de la première partie de la patte de fixation afin de permettre la solidarisation de la pièce à la patte de fixation.

Un inconvénient de ce type de dispositif de réparation réside dans le fait que les vis sont introduites du haut vers le bas et donc leurs têtes sont apparentes lorsque l'on soulève le capot du véhicule. Cette visibilité des vis étant caractéristique de l'utilisation d'un dispositif de réparation sur une patte de fixation cassée, elle peut faire craindre que le reste du bloc optique a été au moins partiellement endommagé. En outre cela peut également faire craindre que le véhicule a subi un choc qui a induit l'endommagement de son bloc optique.

Un dispositif de réparation d'un bloc optique endommagé est connu de US 6 257 749.

L'invention a donc notamment pour but d'améliorer la situation.

Elle propose notamment à cet effet un dispositif de réparation destiné à équiper un bloc optique propre à équiper un véhicule et comprenant un boîtier comportant au moins une patte de fixation comprenant une première partie comportant au moins un premier trou.

Ce dispositif de réparation se caractérise par le fait qu'il comprend une pièce comprenant une partie principale propre à être solidarisée au véhicule et prolongée sur un côté par des première et seconde parois distantes et destinées à être placées en regard respectivement de faces arrière et avant de la première partie de la patte de fixation, cette première paroi comprenant au voisinage de la partie principale une zone d'affaiblissement propre à se casser en cas de choc subi par le bloc optique et au moins un second trou propre à être placé devant un premier trou associé pour permettre le passage d'une vis propre à solidariser la pièce à la première partie de la patte de fixation, et cette seconde paroi étant destinée à masquer la face avant de la première partie et une extrémité de la vis.

Grâce à ce masquage de la face avant, on ne peut voir ni les extrémités libres des vis ni les premiers trous, si bien qu'il n'est pas possible de savoir que la patte de fixation est cassée et couplée à un dispositif de réparation.

Le dispositif de réparation selon l'invention peut comporter d'autres caractéristiques qui peuvent être prises séparément ou en combinaison, et notamment :
- la première paroi de la pièce peut comprendre deux seconds trous propres à être placés respectivement devant deux premiers trous associés pour permettre le passage de deux vis ;
- chaque vis peut être propre à être introduite dans un second trou du côté de la face arrière, puis vissée dans un filetage interne que comprend un premier trou associé de la première partie de la patte de fixation, afin de permettre la solidarisation de la pièce à la patte de fixation ;
- sa pièce peut être réalisée par moulage dans un matériau plastique.

L'invention propose également un bloc optique destiné à équiper un véhicule et comprenant un boîtier comportant, d'une part, au moins une patte de fixation munie d'une première partie comprenant au moins un premier trou, et, d'autre part, un dispositif de réparation solidarisé à la première partie de la patte de fixation.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus pour le premier d'entre eux en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue du dessus, un exemple de réalisation d'un bloc optique ayant une patte de fixation non endommagée,
- la figure 2 illustre schématiquement et fonctionnellement, dans une vue en coupe, une petite partie du boîtier du bloc optique de la figure 1 à laquelle est solidarisée la patte de fixation non endommagée, et
- la figure 3 illustre schématiquement la petite partie du boîtier du bloc optique de la figure 1 à laquelle est solidarisée la patte de fixation endommagée et munie d'un exemple de réalisation d'un dispositif de réparation selon l'invention.

L'invention a notamment pour but de proposer un dispositif de réparation DR destiné à équiper un bloc optique BO usagé et propre à équiper un véhicule.

On entend ici par « bloc optique usagé » un bloc optique ayant au moins une patte de fixation PF cassée, par exemple en raison d'un choc subi.

Par ailleurs, on entend ici par « bloc optique » un équipement de véhicule assurant au moins une fonction photométrique (d'éclairage, de signalisation ou de décoration). Par conséquent, il pourra s'agir d'un phare (ou projecteur avant).

Dans ce qui suit, on considère, à titre d'exemple non limitatif, que le bloc optique BO est destiné à équiper un véhicule de type automobile, comme par exemple une voiture. Mais l'invention n'est pas limitée à ce type de véhicule. Elle concerne en effet tout type de véhicule comportant au moins un bloc optique.

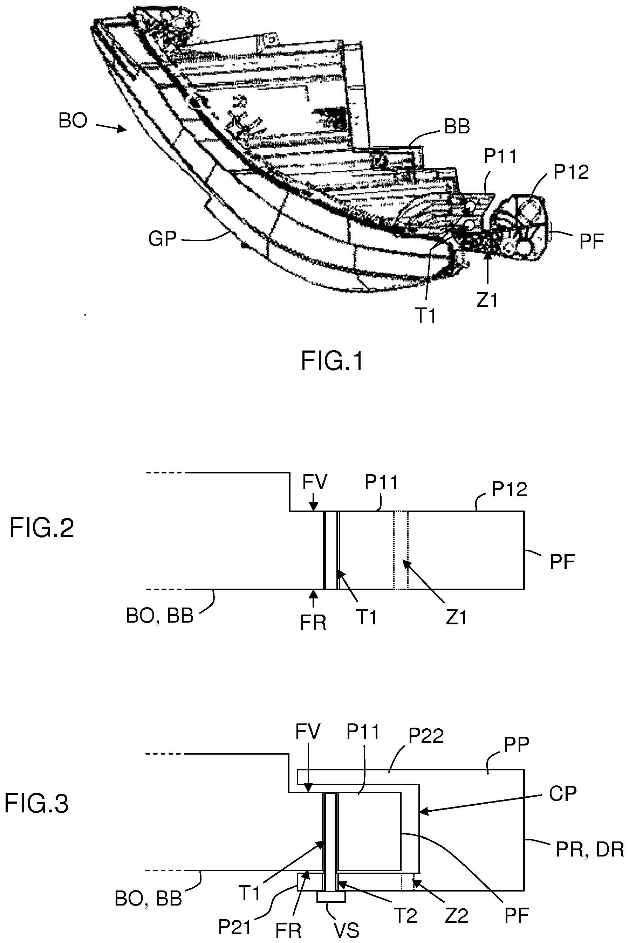

On a schématiquement illustré sur la figure 1 un exemple de bloc optique BO ayant une patte de fixation PF non endommagée. On notera que dans cet exemple le bloc optique BO est un phare (ou projecteur avant). Mais il pourrait également s'agir d'un feu arrière.

Comme illustré, ce bloc optique BO comprend notamment un boîtier BB et une glace de protection GP.

La glace de protection GP est réalisée dans un matériau au moins partiellement transparent, comme par exemple du verre ou une matière plastique ou synthétique, et éventuellement teinté.

Le boîtier BB est réalisé dans un matériau rigide, comme par exemple une matière plastique ou synthétique. Dans ce cas, il peut être réalisé par moulage. Ce boîtier BB délimite une cavité logeant des moyens définissant au moins une fonction photométrique d'éclairage, de signalisation ou de décoration.

Par ailleurs, et comme cela apparaît mieux sur la figure 2, ce boîtier BB comporte au moins une patte de fixation PF munie de première P11 et seconde P12 parties, et d'une première zone d'affaiblissement Z1.

La première partie P11 est solidarisée fixement au boîtier BB et comprend au moins un premier trou T1 dont on comprendra l'utilité plus loin. Chaque premier trou T1 comprend un filetage interne (ou taraudage), qui est de préférence défini dans la masse, mais qui pourrait également être rapporté. Ainsi, chaque premier trou T1 constitue ce que l'homme de l'art appelle fréquemment un fût fileté.

La seconde partie P12 est propre à être solidarisée au véhicule. La première zone d'affaiblissement Z1 est intercalée entre les première P11 et seconde P12 parties et propre à se casser en cas de choc subi par le bloc optique BO. On comprendra qu'en cas de choc, la patte de fixation PF se casse au niveau de sa première zone d'affaiblissement Z1, et donc après ce choc elle ne comprend plus que sa première partie P11. On appelle donc ici « bloc optique usagé (ou endommagé) » le bloc optique BO avec sa patte de fixation PF qui ne comprend plus que sa première partie P11.

L'invention est destinée à permettre la réutilisation du bloc optique BO usagé dans un véhicule, grâce à la solidarisation d'un dispositif de réparation DR à la première partie P11 de sa patte de fixation PF cassée.

Comme illustré non limitativement sur la figure 3, un dispositif de réparation DR, selon l'invention, comprend au moins une pièce PR comportant une partie principale PP et des première P21 et seconde P22 parois.

Cette pièce PR est de préférence monobloc. Dans ce cas, elle peut, par exemple, être réalisée par moulage dans un matériau plastique. Ce dernier peut, par exemple, être un polypropylène (ou PP), comme par exemple le PP TD40.

La partie principale PP est propre à être solidarisée à un élément du véhicule, par exemple par vissage. Elle est destinée à remplacer la seconde partie P12 manquante de la patte de fixation PF. Par ailleurs, cette partie principale PP est prolongée sur un côté CP par les première P21 et seconde P22 parois.

Ces première P21 et seconde P22 parois sont distantes l'une de l'autre et destinées à être placées en regard respectivement d'une face arrière FR et d'une face avant FV de la première partie P11 de la patte de fixation PF. En d'autres termes, la première partie P11 de la patte de fixation PF se retrouve intercalée entre les première P21 et seconde P22 parois.

La face avant FV est par exemple destinée à être orientée vers la face interne du capot du véhicule. C'est donc celle qui est visible lorsque l'on ouvre ce capot. La face arrière FR est opposée à la face avant FV et donc invisible lorsque l'on ouvre le capot.

La première paroi P21 comprend une seconde zone d'affaiblissement Z2 et au moins un second trou T2. La seconde zone d'affaiblissement Z2 est définie au voisinage de la partie principale PP et est propre à se casser en cas de choc subi par le bloc optique BO. Chaque second trou T2 est propre à être placé devant un premier trou T1 associé pour permettre le passage d'une vis VS propre à solidariser la pièce PR à la première partie P11 de la patte de fixation PF.

On notera que dans l'exemple illustré non limitativement sur la figure 1 la première partie P11 de la patte de fixation PF comprend deux premiers trous T1. Par conséquent, la première paroi P21 comprend ici deux seconds trous T2 destinés à être associés respectivement aux deux premiers trous T1. Mais la première partie P11 de la patte de fixation PF pourrait ne comprendre qu'un seul premier trou T1 ou bien plus de deux premiers trous T1, et par exemple trois ou quatre. Ce qu'il faut donc retenir c'est que le nombre de seconds trous T2 est égal au nombre de premiers trous T1 et donc au nombre de vis VS.

Chaque vis VS peut être introduite dans un second trou de la première paroi P21 (et donc du côté de la face arrière FR), puis vissée dans le filetage interne du premier trou (ou fût) T1 associé de la première partie P11 de la patte de fixation PF, afin de permettre la solidarisation de la pièce PR à la patte de fixation PF. Dans ce cas, la tête de chaque vis VS est située du côté de la face arrière FR contre la première paroi P21, tandis que l'extrémité de chaque vis VS est logée dans un premier trou T1, au voisinage de la face avant FV de la première partie P11 de la patte de fixation PF.

La seconde zone d'affaiblissement Z2 peut être agencée de différentes manières. Ainsi, il peut, par exemple, s'agir d'une zone qui présente une épaisseur de matière strictement inférieure à celle d'une zone voisine. On entend ici par « zone voisine » une zone qui est située juste à côté (ou dans le prolongement) d'une seconde zone d'affaiblissement Z2. Cette différence d'épaisseur peut, par exemple, résulter du moule utilisé pour réaliser la pièce PR. En variante, la seconde zone d'affaiblissement Z2 peut résulter de la définition de trous traversants placés les uns à la suite des autres et/ou les uns à côté des autres.

La seconde paroi P22 est destinée à masquer la face avant FV de la première partie P11 de la patte de fixation PF et une extrémité de chaque vis VS.

La face avant FV étant désormais masquée, lorsque l'on soulève le capot du véhicule on ne peut voir ni les extrémités libres des vis (opposées à leurs têtes situées du côté de la face arrière FR) ni les premiers trous T1. Il n'est alors pas possible de savoir que la patte de fixation PF est cassée et couplée à un dispositif de réparation DR.

On notera que la première partie P11 de la patte de fixation PF peut éventuellement comprendre au moins un trou auxiliaire défini dans un plan sensiblement perpendiculaire à chaque premier trou T1. Dans ce cas, ce trou auxiliaire comprend préférentiellement un filetage interne (ou taraudage) destiné à permettre le vissage d'une vis auxiliaire traversant un troisième trou défini dans une protubérance de la première paroi P21 sensiblement perpendiculaire à la face arrière FR. Cette vis auxiliaire, qui est placée sensiblement perpendiculairement aux vis VS, permet d'améliorer la solidarisation de la pièce PR à la patte de fixation PF cassée.

## Revendications

1. Dispositif de réparation (DR) pour un bloc optique (BO) destiné à équiper un véhicule et comprenant un boîtier (BB) comportant au moins une patte de fixation (PF) comprenant une première partie (P11) comportant au moins un premier trou (T1), **caractérisé en ce qu'**il comprend une pièce (PR) comprenant une partie principale (PP) propre à être solidarisée audit véhicule et prolongée sur un côté (CP) par des première (P21) et seconde (P22) parois distantes et destinées à être placées en regard respectivement d'une première face (FR) et d'une deuxième face (FV) opposées de ladite première partie (P11), ladite première paroi (P21) comprenant au voisinage de ladite partie principale (PP) une zone d'affaiblissement (Z2) propre à se casser en cas de choc subi par ledit bloc optique (BO) et au moins un second trou (T2) propre à être placé devant ledit au moins un premier trou (T1) associé pour permettre le passage d'une vis (VS) propre à solidariser ladite pièce (PR) à ladite première partie (P11), et ladite seconde paroi (P22) étant destinée à masquer ladite deuxième face (FV) de la première partie (P11) et une extrémité de la vis (VS).

2. Dispositif selon la revendication 1, **caractérisé en ce que** ladite première paroi (P21) comprend deux seconds trous (T2) propres à être placés respectivement devant deux premiers trous (T1) associés pour permettre le passage de deux vis (VS).

3. Dispositif selon l'une des revendications 1 et 2, **caractérisé en ce que** la vis (VS) est propre à être introduite dans ledit au moins un second trou (T2) du côté de ladite première face (FR), puis vissée dans un filetage interne que comprend ledit au moins un premier trou (T1) associé de ladite première partie (P11) de la patte de fixation (PF), afin de permettre la solidarisation de ladite pièce (PR) à ladite patte de fixation (PF).

4. Dispositif selon l'une des revendications 1 à 3, **caractérisé en ce que** ladite pièce (PR) est réalisée par moulage dans un matériau plastique.

5. Bloc optique (BO) destiné à équiper un véhicule et comprenant un boîtier (BB) comportant au moins une patte de fixation (PF) munie d'une première partie (P11) comprenant au moins un premier trou (T1), **caractérisé en ce qu'**il comprend en outre un dispositif de réparation (DR) selon l'une des revendications précédentes, solidarisé à ladite première partie (P11).

6. Véhicule, **caractérisé en ce qu'**il comprend au moins un bloc optique (BO) selon la revendication 5.

7. Véhicule selon la revendication 6, **caractérisé en ce qu'**il est de type automobile.

## Patentansprüche

1. Reparaturvorrichtung (DR) für eine Leuchteinrichtung (BO), die dazu bestimmt ist, ein Fahrzeug auszustatten und ein Gehäuse (BB) umfasst, das mindestens eine Befestigungspratze (PF) umfasst, die einen ersten Teil (P11) umfasst, der mindestens eine erste Bohrung (T1) umfasst, **dadurch gekennzeichnet, dass** sie ein Teil (PR) umfasst, das einen Hauptteil (PP) umfasst, der dazu geeignet ist, fest mit dem Fahrzeug verbunden zu werden, und auf einer Seite (CP) durch eine erste (P21) und eine zweite (P22) beabstandete Wand verlängert zu werden, die dazu bestimmt sind, gegenüber jeweils einer ersten Fläche (FR) und einer zweiten Fläche (FV), die dem ersten Teil (P11) entgegengesetzt sind, platziert zu werden, wobei die erste Wand (P21) in der Nähe des ersten Hauptteils (PP) eine Schwächungszone (Z2) umfasst, die geeignet ist, in dem Fall eines Stoßes, den die Leuchteinrichtung (BO) erfährt, zu brechen, und mindestens eine zweite Bohrung (T2), die geeignet ist, vor der mindestens einen assoziierten Bohrung (T1) platziert zu werden, um das Durchgehen einer Schraube (VS) zu erlauben, die geeignet ist, um das Teil (PR) fest mit dem ersten Teil (P11) zu verbinden, und wobei die zweite Wand (P22) dazu bestimmt ist, die zweite Fläche (FV) des ersten Teils (P11) und ein Ende der Schraube (VS) abzudecken.

2. Vorrichtung nach Anspruch 1, **dadurch gekennzeichnet, dass** die erste Wand (P21) zwei zweite Bohrungen (T2) umfasst, die geeignet sind, jeweils vor zwei assoziierten ersten Bohrungen (T1) platziert zu werden, um das Durchgehen von zwei Schrauben (VS) zu erlauben.

3. Vorrichtung nach einem der Ansprüche 1 und 2, **dadurch gekennzeichnet, dass** die Schraube (VS) geeignet ist, in die mindestens eine zweite Bohrung (T2) auf der Seite der ersten Fläche (FR) eingeführt und dann in ein Innengewinde geschraubt zu werden, das die mindestens eine assoziierte erste Bohrung (T1) des ersten Teils (P11) der Befestigungspratze (PF) umfasst, um das feste Verbinden des Teils (PR) mit der Befestigungspratze (PF) zu erlauben.

4. Vorrichtung nach einem der Ansprüche 1 bis 3, **dadurch gekennzeichnet, dass** das Teil (PR) durch Formen aus einem Plastikwerkstoff hergestellt ist.

5. Leuchteinrichtung (BO), die dazu bestimmt ist, ein Fahrzeug auszustatten, und die ein Gehäuse (BB) umfasst, das mindestens eine Befestigungspratze (PF) umfasst, die mit einem ersten Teil (P11) versehen ist, der mindestens eine erste Bohrung (T1) umfasst, **dadurch gekennzeichnet, dass** sie außerdem eine Reparaturvorrichtung (DR) nach einem der vorstehenden Ansprüche, die fest mit dem ersten Teil (P11) verbunden ist, umfasst.

6. Fahrzeug, **dadurch gekennzeichnet, dass** es mindestens eine Leuchteinrichtung (BO) nach Anspruch 5 umfasst.

7. Fahrzeug nach Anspruch 6, **dadurch gekennzeichnet, dass** es vom Automobiltyp ist.

## Claims

1. A repair device (DR) for a lighting device (BO) intended to equip a vehicle and including a casing (BB) comprising at least one attaching lug (PF) including a first part (P11) comprising at least a first hole (T1), **characterized in that** it includes a piece (PR) including a main part (PP) suitable to be secured to said vehicle and extended on a side (CP) by first (P21) and second (P22) walls which are distant and are intended to be placed respectively facing a first face (FR) and a second face (FV), opposite one another, of said first part (P11), said first wall (P21) including in the vicinity of said main part (PP) a weakened zone (Z2) suitable to break in the event of an impact undergone by said lighting device (BC), and at least a second hole (T2) suitable to be placed in front of said at least one associated first hole (T1) to permit the passage of a screw (VS) suitable to secure said piece (PR) to said first part (P11), and said second wall (P22) being intended to mask said second face (FV) of the first part (P11) and an end of the screw (VS).

2. The device according to Claim 1, **characterized in that** said first wall (P21) includes two second holes (T2) suitable to be placed respectively in front of two first associated holes (T1) to permit the passage of two screws (VS).

3. The device according to one of Claims 1 and 2, **characterized in that** the screw (VS) is suitable to be introduced in said at least one second hole (T2) of the side of said first face (FR), then screwed in an internal thread which is included by said at least one first associated hole (T1) of said first part (P11) of the attaching lug (PF), so as to permit the securing of said piece (PR) to said attaching lug (PF).

4. The device according to one of Claims 1 to 3, **characterized in that** said piece (PR) is made by moulding in a plastic material.

5. A lighting device (BO) intended to equip a vehicle and including a casing (BB) comprising at least one attaching lug (PF) provided with a first part (P11) including at least a first hole (T1), **characterized in that** it further includes a repair device (DR) according to one of the preceding claims, secured to said first part (P11).

6. A vehicle, **characterized in that** it includes at least one lighting device (BO) according to Claim 5.

7. The vehicle according to Claim 6, **characterized in that** it is of the automobile type.
